(19)

Europäisches
Patentamt
European
Patent Office
Office européen
des brevets

(11) EP 4 768 454 A1

(12) EUROPEAN PATENT APPLICATION

(43) Date of publication:
01.07.2026 Bulletin 2026/27

(21) Application number: 25179237.0

(22) Date of filing: 27.05.2025

(51) International Patent Classification (IPC):
C02F 3/32 (2023.01)     B01D 53/62 (2006.01)
B01F 23/231 (2022.01)   B01F 23/2375 (2022.01)
B01F 23/237 (2022.01)   A01G 33/00 (2006.01)
C02F 1/68 (2023.01)     C02F 1/00 (2023.01)

(52) Cooperative Patent Classification (CPC):
C02F 3/322; B01D 53/62; B01F 23/231;
B01F 23/2375; B01F 23/23762; A01G 33/00;
C02F 1/68; C02F 2001/007; C02F 2209/005;
C02F 2301/028; C02F 2303/26

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.12.2024 KR 20240202177

(71) Applicant: THEZONE Environment Technology
Consultant
Yangju-si Gyeonggi-do (KR)

(72) Inventors:
• LEE, Han Bin
  11774 Uijeongbu-si (KR)
• KIM, Tschung Il
  06517 Seoul (KR)
• KIM, Hee Seok
  01398 Seoul (KR)

(74) Representative: Danubia Patent & Law Office LLC
Bajcsy-Zsilinszky út 16
1051 Budapest (HU)

(54) **SYSTEM FOR REDUCING AND UTILIZING CARBON DIOXIDE GENERATED FROM SEWAGE TREATMENT PLANT**

(57) A system for reducing and utilizing carbon dioxide generated from a sewage treatment plant is disclosed. The disclosed system for reducing and utilizing carbon dioxide generated from a sewage treatment plant includes a sewage treatment plant that purifies introduced sewage in multiple stages and generates carbon dioxide during a treatment process, an algae cultivation device that cultivates and produces microalgae using the carbon dioxide generated from the sewage treatment plant and sewage treated water, and a gas capture device that captures the carbon dioxide generated from the sewage treatment plant, and a nanobubble device that receives the sewage treated water treated from the sewage treatment plant and the carbon dioxide captured from the gas capture device and supplies the sewage treated water in which the carbon dioxide is dissolved by nanobubbles to the algae cultivation device.

Figure 1

**Description**

**BACKGROUND**

Field

The present disclosure relates to a system for reducing and utilizing carbon dioxide, and more specifically, to a system for reducing and utilizing carbon dioxide generated from a sewage treatment plant which uses carbon dioxide generated from a biological reactor of a sewage treatment facility as a carbon dioxide source, thereby realizing carbon capture utilization (CCU) in the sewage treatment facility, which is a source of carbon dioxide emissions, in a smaller amount than supplying carbon dioxide from the flue gas of a conventional thermal power plant, and also achieving water quality purification by using wastewater treated water from the sewage treatment facility as an algae culture medium.

Description of Related Art

Generally, among carbon dioxide removal technologies, direct air capture (DAC, hereinafter referred to as "DAC") extracts and removes carbon dioxide from air using a chemical reaction. To explain more specifically, the DAC is a technology that allows air and chemicals to come into contact with each other so that the chemicals selectively react with carbon oxide to capture the carbon oxide.

The captured carbon is sent to a stripping tower where the carbon is separated into high-concentration carbon, and thus, the carbon can be injected and stored underground or recycled to manufacture concrete or plastic.

The potential of DAC is very large in terms of advancing to a net-zero society that reduces gas emissions to zero to solve the climate crisis.

According to the International Energy Agency (hereinafter, referred to as IEA)'s Net Zero Emissions by 2050 scenario (an energy and climate scenario that illustrates the path to carbon neutrality by 2050), the DAC technology should be able to capture 85 million tons of carbon by 2030 and 980 million tons by 2050.

Today, less than 10,000 tons of carbon is captured using the DAC technology. In addition, today's DAC technology is very expensive and energy-intensive because it requires significant heat and power to capture air and filter out carbon.

Today, using the DAC technology to remove 1 billion tons of carbon dioxide from the atmosphere would require a whopping 10% of the world's total energy consumption.

In order for the DAC technology to truly become a climate crisis solution, the DAC technology must be powered by low-carbon or carbon-free energy sources in addition to technological advancements. In addition, current cost estimates range from about $150 to more than $600 per ton of carbon removed (roughly KRW 200,000 to KRW 800,000 at today's exchange rate). This is a fairly wide range of estimates, and as the technology improves and more projects are implemented, the cost is expected to decrease significantly, but it is clear that it will take time before it is widely commercialized.

Meanwhile, there are 40,000 known species of algae, and they are the organisms with the longest history on Earth and are capable of surviving in a variety of environments. Algae are widely known to cause problems due to abnormal reproduction in relation to water pollution, and commercially, they are receiving attention as a source of high value-added materials such as health supplements, natural pigments, pharmaceutical substances, biochemicals, and feed. Recently, they have been receiving attention as a method for reducing carbon dioxide and producing alternative energy such as biodiesel, bioethanol, and hydrogen in relation to global environmental and warming issues.

In algae culture, nutrients such as nitrogen and phosphorus are used to synthesize cell components, and carbon dioxide is essential for growth through photosynthesis and carbon supply.

The main purpose of carbon capture utilization and storage (CCUS) using microalgae culture is CCUS of carbon dioxide ($CO_2$) mainly emitted as flue gas from thermal power plants, and therefore, nitrogen, phosphorus, and other nutrients necessary for algae culture must be supplied separately.

As a means to overcome these shortcomings, research has been conducted to simultaneously pursue microalgae cultivation and wastewater treatment (phycoremediation) by using wastewater as a culture medium and consuming the components in the wastewater without separately supplying the nutrients necessary for cultivation. However, since power plants and wastewater treatment facilities are generally not located in the same location or in close proximity, it is practically difficult to use the flue gas of a thermal power plant as a carbon dioxide ($CO_2$) source in the technology of using wastewater from the sewage treatment plant as a culture medium for algae cultivation. In addition, when the wastewater is directly used as a culture medium, there are frequent cases of algae death due to high concentrations of nitrogen (N) and phosphorus (P).

SUMMARY

The present disclosure is created to solve the above-mentioned conventional problems, and a purpose thereof is to provide a system for reducing and utilizing carbon dioxide generated from a sewage treatment plant which uses carbon dioxide generated from a biological reactor of a sewage treatment facility as a carbon dioxide source, thereby realizing carbon capture utilization (CCU) in the sewage treatment facility, which is a source of carbon dioxide emissions, in a smaller amount than supplying carbon dioxide from the flue gas of a conventional thermal power plant, and also achieving water quality purification by using wastewater treated water from the sewage treatment facility as an algae culture medium.

In addition, the present disclosure provides a system for reducing and utilizing carbon dioxide generated from a sewage treatment plant which supplies the carbon dioxide generated from the sewage treatment plant to an algae cultivation device using the sewage treated water, and supplies the carbon dioxide as an algae culture medium by dissolving the carbon dioxide in the sewage treated water by nanobubbles, thereby improving a retention time of the carbon dioxide in the algae cultivation device, thereby promoting algae growth rate and facilitating the management of the algae cultivation device.

However, the purpose of the present disclosure is not limited to this, and even when not explicitly stated, the purpose or effect that can be identified from the solution or implementation form of the task is also included.

In order to achieve the above-described objects, a system for reducing and utilizing carbon dioxide generated from a sewage treatment plant includes: an algae cultivation device that cultivates and produces microalgae using the carbon dioxide generated from the sewage treatment plant and sewage treated water; a gas capture device that captures the carbon dioxide generated from the sewage treatment plant; and a nanobubble device that receives the sewage treated water treated from the sewage treatment plant and the carbon dioxide captured from the gas capture device and supplies the sewage treated water in which the carbon dioxide is dissolved by nanobubbles to the algae cultivation device.

The gas capture device may capture carbon dioxide generated from a primary sedimentation tank and a biological reactor of the sewage treatment plant and supply the captured carbon dioxide to the nanobubble device.

The nanobubble device may include a bubble treated water generation section that includes an ejector, receives the sewage treated water and transfers and discharges the sewage treated water at high speed, sucks the carbon dioxide from the gas capture device by a negative pressure generated by a transfer flow of the sewage treated water, and joins the carbon dioxide with the sewage treated water to discharge the carbon dioxide, a treated water transfer pump that is connected to the bubble treated water generation section and generates the transfer flow of the sewage treated water, a bubble splitter that is connected to the bubble treated water generation section through the treated water transfer pump, receives the sewage treated water containing carbon dioxide bubbles from the bubble treated water generation section, and crushes the carbon dioxide bubbles to form carbon dioxide nanobubbles, and a nozzle section that is connected to the bubble splitter, is installed in the algae cultivation device, and discharges the sewage treated water containing the carbon dioxide nanobubbles into the algae cultivation device.

The bubble splitter may include a splitter chamber section that provides a bubble crushing space in which the sewage treated water is introduced and the carbon dioxide bubbles contained in the sewage treated water are split, an inflow pipe section that is connected to the treated water transfer pump and is disposed vertically to the splitter chamber section so that the sewage treated water transferred from the treated water transfer pump forms a downwardly transferred water flow in the splitter chamber section, a bubble crushing cup section that is formed in a tubular shape with an open upper portion and is installed to surround the inflow pipe section inside the splitter chamber section so that the sewage treated water discharged downward through the inflow pipe section collides with the bubbles to crush primary bubbles, and an outlet pipe section that is connected to the nozzle section and is installed parallel to the bubble crushing cup section inside the splitter chamber section so that the sewage treated water discharged upward from the bubble crushing cup section flows in the outlet pipe section and is discharged to the nozzle section.

The bubble splitter may further include a flow path extension section that is installed between the bubble crushing cup section and the outlet pipe section inside the splitter chamber section so that sewage treated water discharged upward from the bubble crushing cup section generates secondary bubble crushing while forming a zigzag flow path.

At least one of the flow path extension sections may be disposed in parallel between the bubble crushing cup section and the outlet pipe section.

The nanobubble device may include one flow path extension section to generate sewage treated water containing carbon dioxide nanobubbles having a size of 950 to 1050 nanometers and supply the sewage treated water to the algae cultivation device, include two flow path extension sections to generate sewage treated water containing carbon dioxide nanobubbles having a size of 800 to 900 nanometers and supply the sewage treated water to the algae cultivation device, and include three flow path extension sections to generate sewage treated water containing carbon dioxide nanobubbles having a size of 650 to 750 nanometers and supply the sewage treated water to the algae cultivation device.

The system may further include a culture information monitoring device that calculates and monitors, by mathematical modeling, result data including a growth rate of microalgae, carbon dioxide fixation efficiency, and an increase amount in microalgae biomass according to environmental conditions of the algae cultivation device.

According to the above, the present disclosure can improve the high cost structure, which is the limitation of the current direct air capture (DAC) technology, by developing a composite process technology that combines the DAC technology and the carbon capture utilization (CCU) technology, and can secure a technology that can be applied to livestock wastewater treatment plants, food wastewater treatment plants, or the like in addition to sewage treatment plants.

In addition, for algae collection, which is a difficult problem in the existing algae cultivation tank, efficient algae collection is achieved by applying a sludge extraction method that applies a sludge retention time (SRT) process in the sewage treatment process, and there is an effect of solving errors in the field.

In addition, although various bubble generators suitable for air, oxygen, and ozone have been developed, there are no bubble generators for carbon dioxide. The carbon dioxide is a polar gas with a high solubility rate, making it difficult to make the bubble size smaller by using a pressure difference. Therefore, the present disclosure applies a splitter-type nanobubble generator to generate nanometer-sized carbon dioxide microbubbles, which significantly improves the residence time in the algae cultivation tank, allowing carbon supply to the algae to be made more smoothly and effectively, thereby increasing the algae growth rate and increasing the productivity of alternative energy using algae.

In addition, the present disclosure can increase a sewage reuse rate by introducing the discharged wastewater into the algae cultivation tank to reuse the discharged water, and can prevent eutrophication of rivers in the summer.

In addition, the present disclosure can provide the basis for a response policy to strengthen international environmental regulations such as greenhouse gas reduction, promotion of CDM projects, and greenhouse gas emissions trading.

In addition, the various beneficial advantages and effects of the present disclosure are not limited to the above-described contents, and can be more easily understood in the process of explaining the specific embodiments of the present disclosure.

BRIEF DESCRIPTION OF THE DRAWING

FIG. 1 is a conceptual diagram of a system for reducing and utilizing carbon dioxide generated from a sewage treatment plant according to a first embodiment of the present disclosure.

FIG. 2 is a block diagram illustrating the system for reducing and utilizing carbon dioxide generated from a sewage treatment plant according to the first embodiment of the present disclosure.

FIG. 3 is a detailed diagram illustrating a nanobubble device of the present disclosure.

FIGS. 4A to 4C are diagrams illustrating various different types of bubble splitters in the nanobubble device of the present disclosure.

FIG. 5 is a diagram illustrating another type of nanobubble device of the present disclosure.

FIG. 6 is a block diagram illustrating a system for reducing and utilizing carbon dioxide generated from a sewage treatment plant according to the second embodiment.

FIG. 7 is a block diagram illustrating a specific configuration of a culture information monitoring device of FIG. 6.

DETAILED DESCRIPTION

The above-mentioned purposes, other purposes, features and advantages of the present disclosure will be easily understood through the following preferred embodiments related to the attached drawings. However, the present disclosure is not limited to the embodiments described herein and may be embodied in other forms. Rather, the embodiments introduced herein are provided so that the disclosed contents can be thorough and complete and so that the idea of the present disclosure can be sufficiently conveyed to those skilled in the art.

In the present specification, when a certain component is mentioned as being on another component, it means that it can be formed directly on the other component or a third component can be interposed between them. Moreover, in the drawings, the thickness of the components is exaggerated for the effective explanation of the technical contents.

In describing the specific embodiments below, various specific details are written to explain the invention more specifically and help understanding. However, a reader who has enough knowledge of the field to understand the present disclosure can recognize that it can be used without these various specific details. In some cases, it is mentioned in advance that parts that are commonly known but not significantly related to the invention are not described in order to prevent unnecessary confusion in explaining the present disclosure.

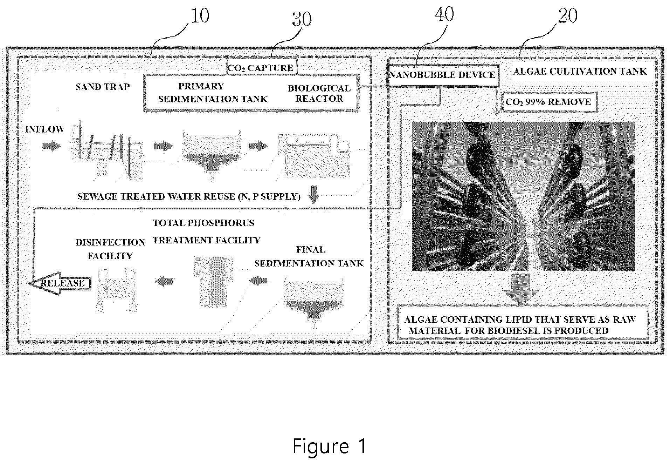

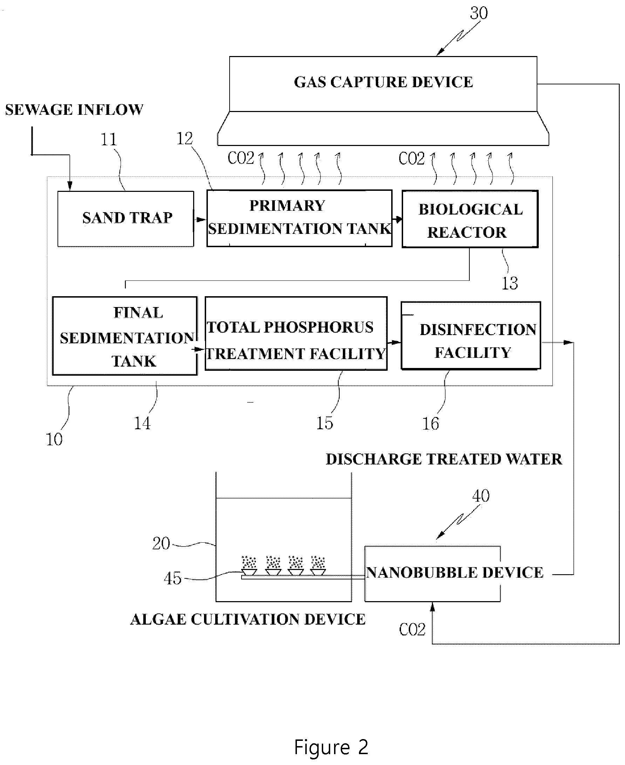

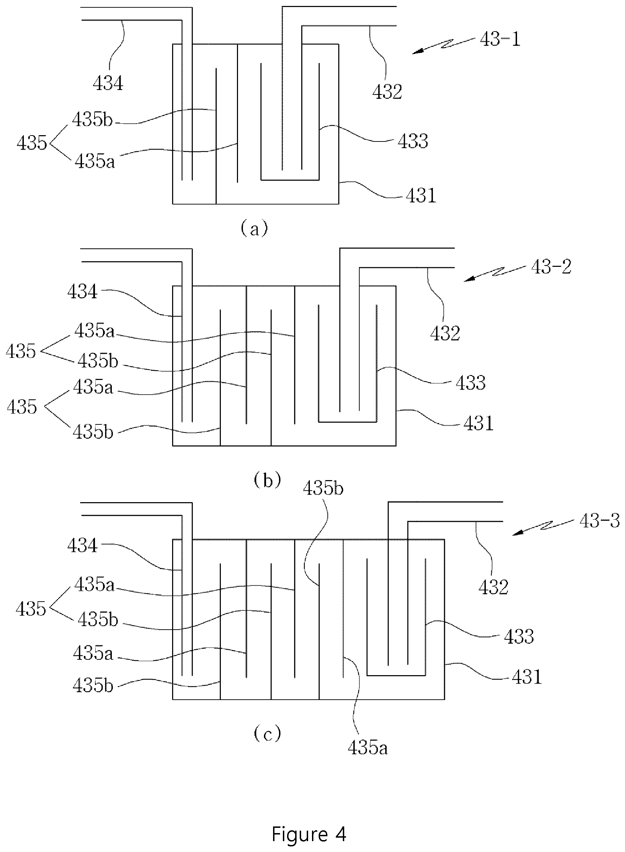

Hereinafter, with reference to FIGS. 1 to 4C, a system for reducing and utilizing carbon dioxide generated from a sewage treatment plant according to the first embodiment of the present disclosure will be described.

The system for reducing and utilizing carbon dioxide generated from a sewage treatment plant of the present disclosure includes a sewage treatment plant 10, an algae cultivation device 20, a gas capture device 30, and a nanobubble device 40.

The sewage treatment plant 10 includes a sand trap 11, a primary sedimentation tank 12, a biological reactor 13, a final sedimentation tank 14, a total phosphorus treatment facility 15, and a disinfection facility 16.

The sand trap 11 is configured to remove suspended solids from the introduced sewage water by introducing raw sewage water and supply the primary treated water to the primary sedimentation tank 12.

The primary sedimentation tank 12 is configured to remove floating substances from the primary treated water introduced from the sand trap 11 by gravity sedimentation and supply the secondary treated water to the biological reactor 13 to reduce the pollutant load in the biological reactor 13.

The biological reactor 13 is configured to remove a certain amount of organic matter and nutrients present in the sewage from the secondary treated water introduced from the primary sedimentation tank 12 using microorganisms and supply the tertiary treated water to the final sedimentation tank 14.

The final sedimentation tank 14 is configured to remove sludge from the tertiary treated water introduced from the biological reactor 13 by gravity sedimentation and supply the quaternary treated water to the total phosphorus treatment facility 15.

The total phosphorus treatment facility 15 is configured to coagulate the total phosphorus contained in the quaternary treated water introduced from the final sedimentation tank 14 to reduce the total phosphorus concentration by a certain amount and supply quinary treated water to the disinfection facility 16.

The disinfection facility 16 is configured to sterilize the quinary treated water introduced from the total phosphorus treatment facility 15 through ultraviolet sterilization and ozone contact reaction and discharge the final sewage treated water.

The final sewage treated water discharged from the disinfection facility 16 is supplied to the nanobubble device 40 so that carbon dioxide is dissolved in the final sewage treated water by nanobubbles through the nanobubble device 40 and supplied to the algae cultivation device 20.

In the above, the sewage treatment plant 10 includes the sand trap 11, the primary sedimentation tank 12, the biological reactor 13, the final sedimentation tank 14, the total phosphorus treatment facility 15, and the disinfection facility 16, and each of the treatment components 11, 12, 13, 14, 15, 16 may be formed with the same configuration and principle as the configuration of a typical sewage treatment facility. In addition, the above is described as including the sand trap 11, the primary sedimentation tank 12, the biological reactor 13, the final sedimentation tank 14, the total phosphorus treatment facility 15, and the disinfection facility 16, but it is not limited thereto, and it can be configured in the same manner as the sewage treatment plant built in the conventional sewage treatment facility that purifies and treats introduced sewage in multiple stages, and the sewage treatment plant 10 is configured to include a six-stage treatment configuration for raw sewage water, but the sewage treatment plant may also be configured to treat in more or fewer treatment stages than the six stages of other sewage treatment facilities.

The algae cultivation device 20 is a device for cultivating microalgae, and most algae grow using carbon dioxide as a carbon source through photosynthesis and use light as an energy source for photosynthesis.

When the carbon dioxide concentration is not sufficient in the algae cultivation environment, the photosynthetic speed may slow down and the carbon supply may be insufficient, which may result in reduced growth.

In addition, the algae cultivation device 20 is configured to receive nutrients such as nitrogen, phosphorus, or the like as the algae cultivation device requires such nutrients.

The present disclosure is characterized in that the algae cultivation device 20 is supplied with nutrients such as nitrogen and phosphorus required for algae culture and carbon dioxide as a carbon source for photosynthesis and growth of algae from the sewage treatment plant 10.

In particular, the present disclosure is configured to not independently supply the final sewage treated water containing nitrogen and phosphorus from the sewage treatment plant 10 and the carbon dioxide captured in the sewage treatment plant 10 to the algae cultivation device 20, but to mix the nano-bubbled carbon dioxide with the final sewage treated water by dissolving it using the nanobubble device 40, and then supply the final sewage treated water containing the carbon dioxide nanobubbles to the algae cultivation device 20.

The gas capture device 30 is configured to capture the carbon dioxide generated from the sewage treatment plant 10.

The gas capture device 30 may be configured to capture the carbon dioxide generated from the primary sedimentation tank 12 and the biological reactor 13 by being configured above the primary sedimentation tank 12 and the biological reactor 13.

The gas capture device 30 may be configured to include a suction fan (not illustrated) for suctioning and capturing the carbon dioxide generated from the primary sedimentation tank 12 and the biological reactor 13.

The nanobubble device 40 is configured to receive the final sewage treated water treated in the sewage treatment plant 10 and the carbon dioxide captured from the gas capture device 30, and to dissolve nanobubble carbon dioxide in the final sewage treated water and supply the sewage treated water in which carbon dioxide nanobubbles are dissolved to the algae cultivation device 20.

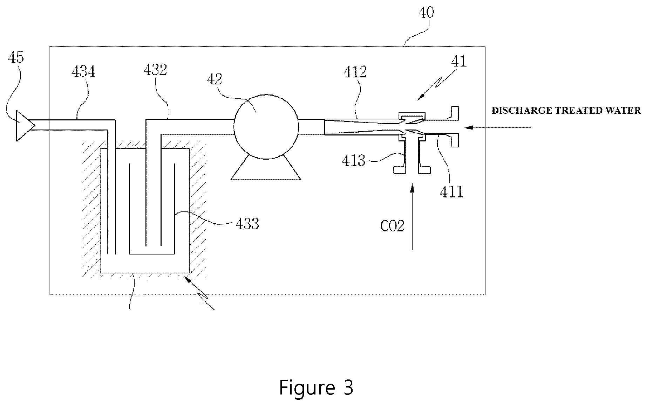

Referring to FIG. 3, the nanobubble device 40 may include a bubble treated water generation section 41, a treated water transfer pump 42, a bubble splitter 43, and a nozzle section 45.

The bubble treated water generation section 41 is configured of an ejector including a treated water inlet 411 which is connected to the disinfection facility 16 to receive the final sewage treated water, a treated water discharge section 412 which discharges the final sewage treated water supplied from the treated water inlet 411, and a gas inlet 413 which is connected to the gas capture device 30 to receive carbon dioxide.

The bubble treated water generation section 41 is connected to the disinfection facility 16 and receives the final sewage treated water that has been finally treated in the sewage treatment plant 10 through the treated water inlet 411, transfers the final sewage treated water at high speed, and discharges the final sewage treated water through the treated water discharge section 412. In this process, the carbon dioxide supplied from the gas capture device 30 is sucked through the gas inlet 413 by the negative pressure generated by the transfer flow of the final sewage treated water, and the sucked carbon dioxide is combined with the final sewage treated water to generate the carbon dioxide bubbles in the final sewage treated water, and the final sewage treated water containing carbon dioxide bubbles is discharged through the treated water discharge section 412.

The treated water transfer pump 42 is configured to be connected to the bubble treated water generation section 41, that is, the treated water discharge section 412, and is configured to generate the transfer flow in which the final sewage treated water containing carbon dioxide bubbles is transferred and supplied from the bubble treated water generation section 41 to the bubble splitter 43.

The bubble splitter 43 is connected to the treated water discharge section 412 of the bubble treated water generation section 41 through the treated water transfer pump 42, and is configured to receive the final sewage treated water containing carbon dioxide bubbles from the bubble treated water generation section 41 and crush the carbon dioxide bubbles to form carbon dioxide nanobubbles.

The bubble splitter 43 is configured to include a splitter chamber section 431, an inflow pipe section 432, a bubble crushing cup section 433, and an outlet pipe section 434.

The splitter chamber section 431 is configured to provide a bubble crushing space in which the final sewage treated water containing carbon dioxide bubbles is introduced and the carbon dioxide bubbles included in the final sewage treated water are split.

The inflow pipe section 432 is connected to the treated water transfer pump 42 and is disposed vertically downward to the splitter chamber section 431, so as to introduce the final sewage treated water containing the carbon dioxide bubbles transferred from the treated water transfer pump 42 into the splitter chamber section 431 to form a downwardly transferred water flow.

The bubble crushing cup section 433 is formed in a tubular shape with an open upper portion and is installed to surround the inflow pipe section 432 inside the splitter chamber section 431 so that the final sewage treated water discharged downward through the inflow pipe section 432 collides with the carbon dioxide and is configured to primarily crush the carbon dioxide bubbles.

The outlet pipe section 434 is connected to the nozzle section 45 and is installed parallel and upward with the bubble crushing cup section 433 inside the splitter chamber section 431, so that the final treated water discharged upward from the bubble crushing cup section 433 is introduced into the outlet pipe section, moves to the lower portion of the splitter chamber section 431, and then flows in the outlet pipe section and is discharged through the nozzle section 45.

The nozzle section 45 is connected to the outlet pipe section 434 of the bubble splitter 43 and is installed in the algae cultivation device 20 to discharge and supply the final sewage treated water containing carbon dioxide nanobubbles into the algae cultivation device 20.

Meanwhile, referring to FIGS. 4A to 4C, the present disclosure states that the bubble splitter 43 may further include a flow path extension section 435 installed between the bubble crushing cup section 433 and the outlet pipe section 434 inside the splitter chamber section 431 so that the final treated water discharged upward from the bubble crushing cup section 433 generates secondary bubble crushing while forming a zigzag flow path.

This flow path extension section 435 may be configured to include a first flow path extension bulkhead 435a that extends vertically downward from the ceiling of the splitter chamber section 413, and a second flow path extension bulkhead 435b that is formed parallel to the first flow path extension bulkhead 435a and extends vertically upward from the bottom of the splitter chamber section 413.

One flow path extension section 435 may be configured as in FIG. 4A, two flow path extension sections 435 may be configured as in FIG. 4B, or three flow path extension sections 435 may be configured as in FIG. 4C.

Depending on the number of installed flow path extension sections 435, the size of carbon dioxide nanobubbles included in the final sewage treated water may be controlled.

The more flow path extension sections 435 are installed, the smaller the size of carbon dioxide nanobubbles included in the final sewage treated water can be.

The nanobubble device 40 of the present disclosure may be configured with one flow path extension section 435 to generate the final sewage treated water containing carbon dioxide nanobubbles with a size of 950 to 1050 nanometers (nm, $10^{-9}$ m) and supply the final sewage treated water to the algae cultivation device 20.

In addition, the nanobubble device 40 of the present disclosure may be configured with two flow path extension sections 435 to generate the final sewage treated water containing carbon dioxide nanobubbles with a size of 800 to 900 nanometers and supply the final sewage treated water to the algae cultivation device 20.

In addition, the nanobubble device 40 of the present disclosure may be configured with three flow path extension sections 435 to generate the final sewage treated water containing carbon dioxide nanobubbles of 650 to 750 nanometers in size and supply the final sewage treated water to the algae cultivation device 20.

However, when the nanobubble device 40 of the present disclosure is configured with four or more flow path extension sections 435, it is possible to generate the carbon dioxide nanobubbles of finer nanometer sizes and supply the final sewage treated water to the algae cultivation device 20. However, in this case, the left and right lengths of the nanobubble device 40 become longer, which may limit the installation area, so it is preferable to configure the flow path extension sections with up to three.

In this way, the carbon dioxide nanobubbles of nanometer size are included in the final sewage treated water through the nanobubble device 40, and then supplied to the algae cultivation device 20 through the nozzle section 45, so that the algae containing lipids that serve as raw materials for biodiesel can be produced in the algae cultivation device 20.

The carbon dioxide formed into nanobubbles in the final sewage treated water supplied to the algae cultivation device 20 through the nanobubble device 40 may be consumed during algae growth and removed by more than 99% in the algae cultivation device 20, and the N and P remaining in the final sewage treated water may also consumed during algae growth and removed by more than 99% in the algae cultivation device 20.

That is, according to the present disclosure, it is possible to significantly reduce a flotation speed of carbon dioxide nanobubbles in the algae cultivation device 20 compared to micrometer-sized nanobubbles by dissolving the carbon dioxide nanobubbles in the final sewage treated water by the nanobubble device 40 and introducing them into the algae cultivation device 20, thereby greatly increasing the residence time of carbon dioxide nanobubbles in the final sewage treated water, thereby lengthening the supply cycle of the final sewage treated water supplied to the algae cultivation device 20, and allowing the floating carbon dioxide to be completely consumed in the algae cultivation without having to be recovered again.

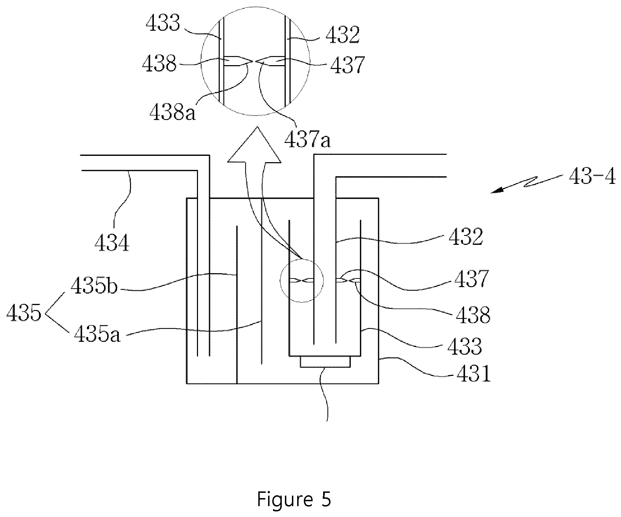

Meanwhile, referring to FIG. 5, the nanobubble generation device 40 of the present disclosure may be configured to further include an ultrasonic vibration unit 436 and bubble crushing disk units 437 and 478 in the bubble splitter 43.

The ultrasonic vibration unit 436 is installed to be in contact with the lower surface of the bubble crushing cup section 433 and vibrates the bubble crushing cup section 433, so that when the final sewage treated water discharged downward through the inflow pipe section 432 to the lower portion of the bubble crushing cup section 433 collides with the carbon dioxide bubbles, crushing of finer bubbles is realized until the carbon dioxide bubbles are primarily crushed.

The bubble crushing disk sections 437 and 438 includes a first bubble crushing disk 437 and a second bubble crushing disk 438. The first bubble crushing disk 437 is fixedly installed on the outer surface of the inflow pipe section 432, the second bubble crushing disk 438 is fixedly installed on the inner surface of the bubble crushing cup section 433, and the first bubble crushing disk 437 and the second bubble crushing disk 438 are configured to face each other at the same height.

In addition, the outer end of the first bubble crushing disk 437 is provided with a first tip 437a that is gradually thinner and has a sharp shape, and the inner end of the second bubble crushing disk 438 is provided with a second tip 438a that is gradually thinner and has a sharp shape. The first tip 437a and the second tip 438a are disposed at the same height, face each other, and are installed with a gap of several millimeters to several nanometers.

The bubble crushing disk units 437 and 438 having such a configuration may be configured to further finely crush microbubbles in the final sewage treated water that is transferred upward through the gap between the first bubble crushing disk 437 and the second bubble crushing disk 438 while the second bubble crushing disk 438 also vibrates in conjunction with the vibration of the ultrasonic vibration unit 436.

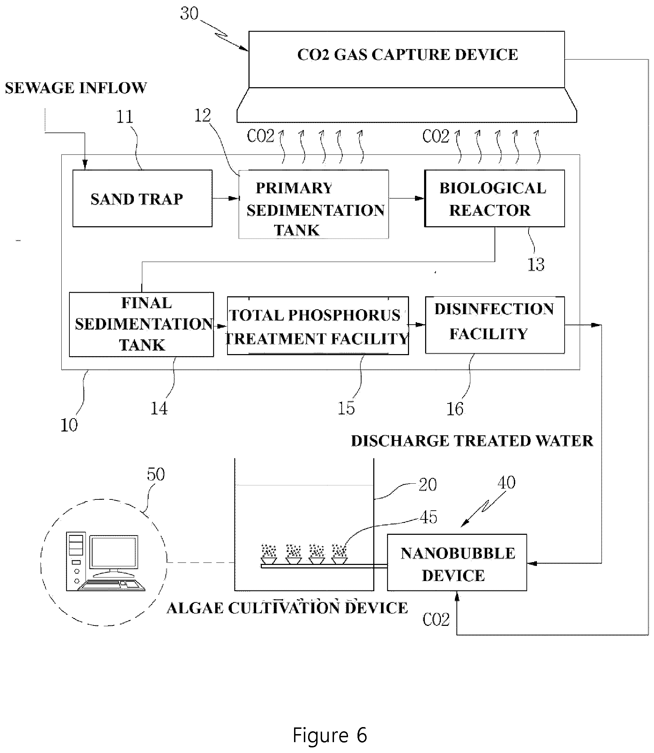

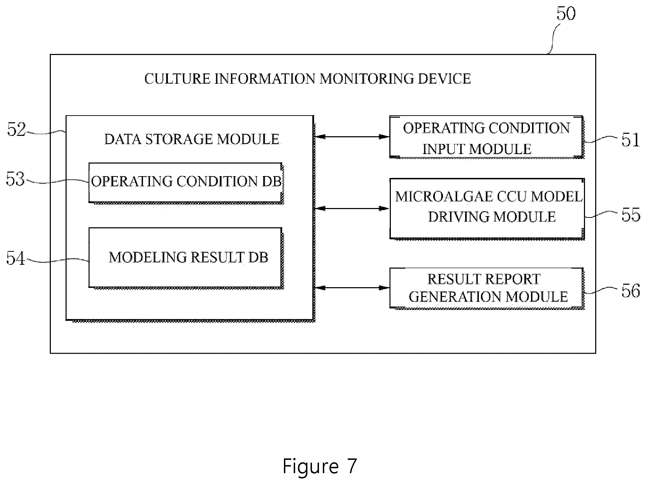

Hereinafter, with reference to FIGS. 6 and 7, a system for reducing and utilizing carbon dioxide generated from a sewage treatment plant according to a second embodiment of the present disclosure will be described.

The system for reducing and utilizing carbon dioxide generated from a sewage treatment plant of the second embodiment is the same as that of the first embodiment except that it includes a culture information monitoring device 50 compared to the first embodiment. Therefore, the same reference numerals are given to the same components and the descriptions thereof are omitted, and the different components, that is, the culture information monitoring device 50, will be described in detail.

The culture information monitoring device 50 is configured to monitor the culture information indicating the growth of microalgae and carbon dioxide fixation efficiency according to the environmental conditions of the algae cultivation device by mathematical modeling.

The culture information motoring device 50 includes an operating condition input module 51, a data storage module 52, a microalgae CCU model driving module 55, and a result report generation module 56.

The culture information motoring device 50 may be configured as a server or a computing type, and each module of the culture information motoring device 50 may be configured as software or hardware, or an integrated form of software and hardware.

The operating condition input module 51 is configured to receive and set operating condition information including a shape of a culture tank, a volume, pH, light intensity, a water temperature, pH of the inflow water, nitrogen and phosphorus concentrations, carbon dioxide concentration and inflow rate, carbon dioxide solubility and delivery supply rate according to nanobubble operation, microalgae species information, an initial microalgae inflow amount, a new microalgae inflow amount, an initial microalgae concentration, a biomass generation amount due to algae growth, or the like for the algae cultivation device 20. This operating condition information may be received by various sensors installed in the algae cultivation device 20, or may be configured to receive input directly from a manager through a user interface by providing a user interface.

The data storage module 52 is configured to store operating conditions input through the operating condition input module 51 and result data by the operation of the microalgae CCU model driving module 55. In this case, the result data by the operation of the microalgae CCU model driving module 55 may include a microalgae growth rate, carbon dioxide fixation efficiency, and a microalgae biomass increase amount, and may include an operating condition DB 53 where operating conditions are stored and managed, and a modeling result DB 54 where result data are stored and managed.

The microalgae CCU model driving module 55 is configured to calculate the microalgae growth rate, the carbon dioxide fixation efficiency, and the microalgae biomass increase amount based on the operating condition information input from the operating condition input module 51, and store and manage the calculated result data in the data storage module 52.

The microalgae CCU model driving module 55 is configured to calculate the microalgae growth rate (specific growth rate, unit: day$^{-1}$) per unit time of microalgae by Calculation Expression (1).

The Calculation Expression (1) is as follows.

$$\mu = \mu_{max} \cdot \frac{S}{K_S + S} \cdot \frac{I}{K_I + I}$$

$$\dots \text{ Calculation Expression (1)}$$

Here, $\mu$ (Specific Growth Rate, unit: day$^{-1}$) is the calculated microalgae growth per unit time, $\mu_{max}$ is the maximum growth rate that microalgae can reach in a specific environment, $\dfrac{S}{K_S + S}$ is the substrate concentration effect value, and $\dfrac{I}{K_I + I}$ is the light intensity effect value.

In addition, in the substrate concentration effect, S is the substrate concentration required for the growth of microalgae, and KS is the substrate concentration when the substrate concentration of microalgae reaches half of $\mu_{max}$.

In addition, in the light intensity effect, is the light intensity for photosynthesis, and $K_I$ is the light intensity when the light intensity reaches half of $\mu_{max}$.

In the above substrate effect, when the substrate concentration is low, the algal growth rate also decreases, and when S>>$K_S$, the algal growth rate approaches $\mu_{max}$, and when S<<Ks, it converges to almost 0.

In addition, in the above light intensity effect, when the light is strong, the speed increases, but when it exceeds a certain level, it becomes saturated and the growth rate no longer increases, and when I>>$K_S$, the algae growth speed approaches , and when I<<Ks, the growth rate converges to almost 0.

The microalgae CCU model driving module 55 is configured to calculate the carbon dioxide fixation efficiency by the Calculation Expression (2).

The Calculation Expression (2) is as follows.

$$E_{CO2} = \frac{P_{CO2,fixed}}{P_{CO2,input}} \times 100$$

$$\dots \text{ Calculation Expression (2)}$$

Here, $E_{CO2}$ (CO2 Fixation Efficiency, unit: %) is the ratio of the carbon dioxide actually fixed among the input carbon dioxide, $P_{CO2,input}$ (Input $CO_2$, unit: g or mol) is the amount of carbon dioxide injected into the algae cultivation device 20, and $E_{CO2}$ ($CO2$ Fixation Efficiency, unit: %) represents the amount of carbon dioxide fixed in the photosynthetic and biological growth process of microalgae.

The microalgae CCU model driving module 55 is configured to calculate the increase amount in microalgae biomass by the Calculation Expression (3).

The Calculation Expression (3) is as follows.

$$\triangle X_{biomass} = \frac{M_{CO2}}{M_{biomass}} \quad \text{... Calculation Expression (3)}$$

Here, $\triangle X_{biomass}$ is the increase amount of microalgae biomass (unit: g/L), $M_{CO2}$ is the molar mass of carbon dioxide (44 g/mol), and $M_{biomass}$ is the molar mass of microalgae biomass.

In this way, the microalgae CCU model driving module 55 may use mathematical modeling including Calculation Expression (1), Calculation Expression (2), and Calculation Expression (3) to calculate result data such as the microalgae growth rate per hour, the carbon dioxide fixation efficiency, and the increase amount of microalgae biomass according to input conditions; also, based on the result data calculated in this way, the input condition information may be fed back to improve the microalgae growth rate, the carbon dioxide fixation efficiency, and the increase amount of microalgae biomass, thereby optimizing the operation of the algae cultivation device 20.

The result report generation module 56 may be configured to generate and save result data including the microalgae growth rate per hour, the carbon dioxide fixation efficiency, and the increase amount in microalgae biomass calculated by the microalgae CCU model driving module 55 as a graph file, and to output the generated result data in the form of a graph on the screen.

The present disclosure has been illustrated and described in connection with preferred embodiments for illustrating the principles of the present disclosure, but the present disclosure is not limited to the configuration and operation as illustrated and described. Rather, those skilled in the art will be able to understand that numerous changes and modifications to the present disclosure are possible without departing from the spirit and scope of the appended patent claims. Accordingly, all such appropriate changes and modifications and equivalents should also be considered to fall within the scope of the present disclosure.

**Claims**

1. A system for reducing and utilizing carbon dioxide generated from a sewage treatment plant, the system comprising:

   an algae cultivation device that cultivates and produces microalgae using the carbon dioxide generated from the sewage treatment plant and sewage treated water;
   a gas capture device that captures the carbon dioxide generated from the sewage treatment plant; and
   a nanobubble device that receives the sewage treated water treated from the sewage treatment plant and the carbon dioxide captured from the gas capture device and supplies the sewage treated water in which the carbon dioxide is dissolved by nanobubbles to the algae cultivation device.

2. The system of claim 1, wherein the gas capture device captures carbon dioxide generated from a primary sedimentation tank and a biological reactor of the sewage treatment plant and supplies the captured carbon dioxide to the nanobubble device.

3. The system of claim 2, wherein the nanobubble device includes

   a bubble treated water generation section that includes an ejector, receives the sewage treated water and transfers and discharges the sewage treated water at high speed, sucks the carbon dioxide from the gas capture device by a negative pressure generated by a transfer flow of the sewage treated water, and joins the carbon dioxide with the sewage treated water to discharge the carbon dioxide,
   a treated water transfer pump that is connected to the bubble treated water generation section and generates the transfer flow of the sewage treated water,
   a bubble splitter that is connected to the bubble treated water generation section through the treated water transfer pump, receives the sewage treated water containing carbon dioxide bubbles from the bubble treated water generation section, and crushes the carbon dioxide bubbles to form carbon dioxide nanobubbles, and

a nozzle section that is connected to the bubble splitter, is installed in the algae cultivation device, and discharges the sewage treated water containing the carbon dioxide nanobubbles into the algae cultivation device.

4. The system of claim 3, wherein the bubble splitter includes

a splitter chamber section that provides a bubble crushing space in which the sewage treated water is introduced and the carbon dioxide bubbles contained in the sewage treated water are split,
an inflow pipe section that is connected to the treated water transfer pump and is disposed vertically to the splitter chamber section so that the sewage treated water transferred from the treated water transfer pump forms a downwardly transferred water flow in the splitter chamber section,
a bubble crushing cup section that is formed in a tubular shape with an open upper portion and is installed to surround the inflow pipe section inside the splitter chamber section so that the sewage treated water discharged downward through the inflow pipe section collides with the bubbles to crush primary bubbles, and
an outlet pipe section that is connected to the nozzle section and is installed parallel to the bubble crushing cup section inside the splitter chamber section so that the sewage treated water discharged upward from the bubble crushing cup section flows in the outlet pipe section and is discharged to the nozzle section.

5. The system of claim 4, wherein the bubble splitter further includes a flow path extension section that is installed between the bubble crushing cup section and the outlet pipe section inside the splitter chamber section so that sewage treated water discharged upward from the bubble crushing cup section generates secondary bubble crushing while forming a zigzag flow path.

6. The system of claim 4, wherein at least one of the flow path extension sections is disposed in parallel between the bubble crushing cup section and the outlet pipe section.

7. The system of claim 6, wherein the nanobubble device

includes one flow path extension section to generate sewage treated water containing carbon dioxide nanobubbles having a size of 950 to 1050 nanometers and supply the sewage treated water to the algae cultivation device,
includes two flow path extension sections to generate sewage treated water containing carbon dioxide nanobubbles having a size of 800 to 900 nanometers and supply the sewage treated water to the algae cultivation device, and
includes three flow path extension sections to generate sewage treated water containing carbon dioxide nanobubbles having a size of 650 to 750 nanometers and supply the sewage treated water to the algae cultivation device.

8. The system of claim 1, further comprising a culture information monitoring device that calculates and monitors, by mathematical modeling, result data including a growth rate of microalgae, carbon dioxide fixation efficiency, and an increase amount in microalgae biomass according to environmental conditions of the algae cultivation device.

Figure 1

Figure 2

Figure 3

Figure 4

Figure 5

30

**CO2 GAS CAPTURE DEVICE**

SEWAGE INFLOW

11        12

CO2 ↑ ↑ ↑ ↑ ↑        CO2 ↑ ↑ ↑ ↑ ↑

| SAND TRAP | → | PRIMARY SEDIMENTATION TANK | → | BIOLOGICAL REACTOR |

13

| FINAL SEDIMENTATION TANK | TOTAL PHOSPHORUS TREATMENT FACILITY | DISINFECTION FACILITY |

14        15        16

10

DISCHARGE TREATED WATER

50        20        40

45

**NANOBUBBLE DEVICE**

ALGAE CULTIVATION DEVICE        CO2

Figure 6

Figure 7

Europäisches
Patentamt

European
Patent Office

Office européen
des brevets

# EUROPEAN SEARCH REPORT

**Application Number**

EP 25 17 9237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0161677 A (I SAN CO LTD [KR]) 28 November 2023 (2023-11-28) * figure 2 * * paragraphs [0033] - [0048] * | 1-8 | INV. C02F3/32 B01D53/62 B01F23/231 B01F23/2375 |
| X | WO 2024/107830 A1 (UNIV CALIFORNIA [US]; UNIV KANAZAWA [JP]) 23 May 2024 (2024-05-23) * figure 1 * * paragraphs [0073] - [0074] * | 1-8 | B01F23/237 ADD. A01G33/00 C02F1/68 C02F1/00 |
| A | KUMAR A ET AL: "Enhanced CO"2 fixation and biofuel production via microalgae: recent developments and future directions", TRENDS IN BIOTECHNOLOGY, ELSEVIER PUBLICATIONS, CAMBRIDGE, GB, vol. 28, no. 7, 1 July 2010 (2010-07-01), pages 371-380, XP027102413, ISSN: 0167-7799 [retrieved on 2010-06-10] * page 376, left-hand column, paragraph first * | 1-8 | |
| A | WO 2022/186014 A1 (IDEC CORP [JP]) 9 September 2022 (2022-09-09) * figure 1 * * paragraph [0019] * | 1-8 | TECHNICAL FIELDS SEARCHED (IPC) C02F B01F C12N B01D A01G |

The present search report has been drawn up for all claims

| Place of search | Date of completion of the search | Examiner |
|---|---|---|
| The Hague | 22 October 2025 | Onel Inda, Santiago |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.............................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 17 9237

This annex lists the patent family members relating to the patent documents cited in  the above-mentioned European search report.
The members are as contained in the European Patent Office EDP file on
The European Patent Office is in no way liable for these particulars which are merely given for the purpose of information.

22-10-2025

| Patent document cited in search report | Publication date | Patent family member(s) | | Publication date |
|---|---|---|---|---|
| KR 20230161677 A | 28-11-2023 | NONE | | |
| WO 2024107830 A1 | 23-05-2024 | NONE | | |
| WO 2022186014 A1 | 09-09-2022 | JP | 2022134808 A | 15-09-2022 |
| | | WO | 2022186014 A1 | 09-09-2022 |

EPO FORM P0459

For more details about this annex : see Official Journal of the European Patent Office, No. 12/82